# EUROPEAN PATENT APPLICATION

(11) **EP 1 811 217 A1**
(43) Date of publication of application: **25.07.2007**
(21) Application number: 07000811.5
(22) Date of filing: 16.01.2007
(51) Int. Cl.: F16L 1/024

(54) **Aerial pipe arrangement and method of aerially arranging pipes**

(30) Priority: 18.01.2006 JP 2006009836
(71) Applicant: Pipe System Japan Limited Liability Partnership, Sanjyo-shi Niigata (JP)
(72) Inventor: Sekine, Shigeyuki, Niigata-shi Niigata (JP)
(74) Representative: Zimmermann, Gerd Heinrich

(57) **Abstract**

The pipe arrangement (100) for feeding fluid to a fluid-receiver (103) from a fluid-supplier (102) through a pipe, includes a wire (113) tensioned between a first support (301) and a second support (302), a hollow fluid-feeding pipe (120) extending between the first and second supports, and a hanger (130) for allowing the fluid-feeding pipe (120) to hang from the wire (113). The fluid-feeding pipe (120) is comprised of a plurality of fundamental pipes (150) capable of being connected to one another. A second fundamental pipe connected to a first fundamental pipe can extend and contract axially thereof relative to the first fundamental pipe, and can further bend obliquely relative to the first fundamental pipe.

## Description

The present invention generally relates to pipe systems. In particular it relates to pipe systems in an aerial arrangement. More specifically, it relates to an aerial pipe arrangement, and a method of aerially arranging pipes.

Water pipes and gas pipes are generally buried below roads.

Those pipes have been conventionally buried at a depth of about 12 meters. Recently, they are buried at a depth of about 6 meters.

However, it is often impossible to bury water and/or gas pipes in certain areas. For instance, it is impossible to bury water and/or gas pipes below a river, in an area in which a lot of pipes have been already buried, and hence, there is no sufficient space to newly bury pipes, below a heavy traffic road, below a railroad, or in an area in which it is difficult to remove and recover concrete and asphalt.

Japanese Patent Application Publication No. 63-246585 has suggested a system of aerially arranging pipes, including poles spaced away from each other, a wire tensioned between the poles, and support wires hanging from the wire for supporting pipes arranged below the wire.

Japanese Patent Application Publication No. 63-5010 has suggested a pair of steel pipes connectable to each other.

Japanese Patent Application Publication No. 61-52594 has suggested a swingable arm for connecting a connection hose to a fixed pipe.

The combination of the above-listed three Publications would provide an aerial pipe arrangement which makes it possible to arrange pipes, for instance, above a river or above a railroad.

However, the pair of steel pipes suggested in Japanese Patent Application Publication No. 63-5010 has problems that the steel pipes can be connected to each other, but it is impossible to avoid the steel pipes from separating from each other, and that one of the steel pipes is not bendable and extendable relative to the other.

Accordingly, the aerial pipe arrangement comprised of the combination of the above-listed three Publications is accompanied with a problem of poor resistance to vibration, for instance, caused by earthquake.

In view of the above-mentioned problem in the prior art, it is an object of the present invention to provide an aerial pipe arrangement for feeding fluid to a fluid-receiver from a fluid-supplier through a pipe, and a method of aerially arranging pipes for feeding fluid to a fluid-receiver from a fluid-supplier, both of which provide high resistance to vibration.

Thus, the aerial pipe arrangement according to independent claim 1 and the method of aerially arranging pips according to independent claim 9 are provided.

Further advantages, features, aspects and details of the invention are evident from the dependent claims, the description and the drawings.

In one aspect of the present invention, there is provided an aerial pipe arrangement for feeding fluid to a fluid-receiver from a fluid-supplier through a pipe, including a wire tensioned between a first support and a second support, a hollow fluid-feeding pipe extending between the first and second supports, and a hanger for allowing the fluid-feeding pipe to hang from the wire, wherein the fluid-feeding pipe is comprised of a plurality of fundamental pipes capable of being connected to one another, a second fundamental pipe connected to a first fundamental pipe can extend and contract axially thereof relative to the first fundamental pipe, and can further bend obliquely relative to the first fundamental pipe, the first fundamental pipe is formed at one end thereof with an increased-radius portion having an increased inner radius, and a flange formed continuous to the increased-radius portion, the second fundamental pipe is formed with at least one projection located remote from an end of the second fundamental pipe, the first and second fundamental pipes are connected to each other through a movable flange, the movable flange has an inner diameter to fit around the second fundamental pipe, the movable flange is formed at an inner edge thereof with a cut-out through which the projection can pass, and when the first and second fundamental pipes are connected to each other through the movable flange, the movable flange is connected to the flange of the first fundamental pipe such that the projection and the cut-out are not in alignment with each other.

In another aspect, there is provided a method of aerially arranging pipes for feeding fluid to a fluid-receiver from a fluid-supplier, including tensioning a wire between a first support and a second support, and hanging a hollow fluid-feeding pipe extending between the first and second supports, from the wire, wherein the fluid-feeding pipe is comprised of a plurality of fundamental pipes capable of being connected to one another, a second fundamental pipe connected to a first fundamental pipe can extend and contract axially thereof relative to the first fundamental pipe, and can further bend obliquely relative to the first fundamental pipe, the first fundamental pipe is formed at one end thereof with an increased-radius portion having an increased inner radius, and a flange formed continuous to the increased-radius portion, the second fundamental pipe is formed with at least one projection located remote from an end of the second fundamental pipe, the first and second fundamental pipes are connected to each other through a movable flange, the movable flange has an inner diameter to fit around the second fundamental pipe, the movable flange is formed at an inner edge thereof with a cut-out through which the projection can pass, and when the first and second fundamental pipes are connected to each other through the movable flange, the movable flange is connected to the flange of the first fundamental pipe such that the projection and the cut-out are not in alignment with each other.

The advantages obtained by the aforementioned present invention will be described hereinbelow.

First, it is possible to make it unnecessary to conduct asphalt cutting and construction works for arranging pipes, by constructing the aerial pipe arrangement in accordance with the present invention above asphalt roads. In other words, it is possible to minimize excavation of roads. Thus, industrial waste such as surplus soil, waste asphalt and smashed rocks can be reduced to 1/5 to 1/10 in volume relative to conventional constructions.

Furthermore, it is possible to avoid excavation of roads in a shopping street, heavy-traffic roads or narrow roads, avoiding inconvenience of inhabitants.

Second, it would be possible to use a fluid-feeding pipe having a large diameter, if first and second supply-poles shown in the third embodiment explained later are surely fixed. Thus, the aerial pipe arrangement in accordance with the present invention can be broadly used.

Third, whereas it was necessary in conventional construction for temporarily arranging water/gas pipes to twice conduct connection of existing pipes to each other in the ground, the aerial pipe arrangement in accordance with the present invention makes it possible to reduce the number of conducting the connection to one.

Furthermore, it was absolutely necessary in the conventional construction to excavate roads to look for existing pipes in order to connect gas/water meters of each house to the existing pipes, when pipes are temporarily arranged.

In contrast, as mentioned in the fourth embodiment of the present invention explained later, it would be no longer necessary to conduct such excavation of roads, if a branch pipe is connected to the aerially arranged fluid-feeding pipe.

Fourth, the aerial pipe arrangement in accordance with the present invention is safe to gas leakage.

If gas leaks from a pipe buried in the ground, the gas is accumulated in the ground, or flows up to the atmosphere. In either case, if the leaked gas catches fire, the gas would be exploded.

In contrast, in the aerial pipe arrangement in accordance with the present invention, even if gas leaks from the fluid-feeding pipe, the gas would not catch fire, because there is no fire in the air. Furthermore, the leaked gas would be quite swiftly scattered in the air, the gas would not catch fire.

The aerial pipe arrangement in accordance with the present invention makes it possible to conduct a plurality of constructions in parallel.

Gas pipe construction and water pipe construction have been conventionally conducted simultaneously in order to reduce construction costs. Hence, if gas pipe construction is conducted slower than water pipe construction, both of the constructions have to be conducted at a speed of the gas pipe construction. Accordingly, it is quite difficult to shorten a construction term of the gas pipe construction and the water pipe construction.

In contrast, the aerial pipe arrangement in accordance with the present invention makes it possible to conduct gas/water pipe constructions independently of each other. For instance, first and second persons can conduct gas pipe construction and water pipe construction respectively independently of each other (for instance, at left and right sided of a road), ensuring that a construction term can be significantly shortened, and that construction costs can be reduced.

Embodiments are also directed to apparatuses manufactured by the disclosed methods and including apparatus parts for corresponding to each described method steps. Furthermore, embodiments are also directed to methods by which the described apparatus is manufactured. It may include method steps for manufacturing every part of the apparatus. The method steps may be performed by way of hardware components, a computer programmed by appropriate software, by any combination of the two or in any other manner.

The invention will be better understood by reference to the following description of embodiments of the invention taken in conjunction with the accompanying drawings, wherein:
FIG. 1 illustrates an aerial pipe arrangement in accordance with the first embodiment of the present invention.
FIG. 2 is an exploded perspective view of the fundamental pipes.
FIG. 3 is a perspective view showing one of steps for connecting first and second fundamental pipes to each other.
FIG. 4 is a perspective view showing one of steps for connecting first and second fundamental pipes to each other.
FIG. 5 is a perspective view showing one of steps for connecting first and second fundamental pipes to each other.
FIG. 6 illustrates first and second fundamental pipes connected to each other.
FIG. 7 illustrates an aerial pipe arrangement in accordance with the second embodiment of the present invention.
FIG. 8 illustrates an aerial pipe arrangement in accordance with the third embodiment of the present invention.
FIG. 9 illustrates an aerial pipe arrangement in accordance with the fourth embodiment of the present invention.
FIG. 10 illustrates an aerial pipe arrangement in accordance with the fifth embodiment of the present invention.

Preferred embodiments in accordance with the present invention will be explained hereinbelow with reference to drawings.

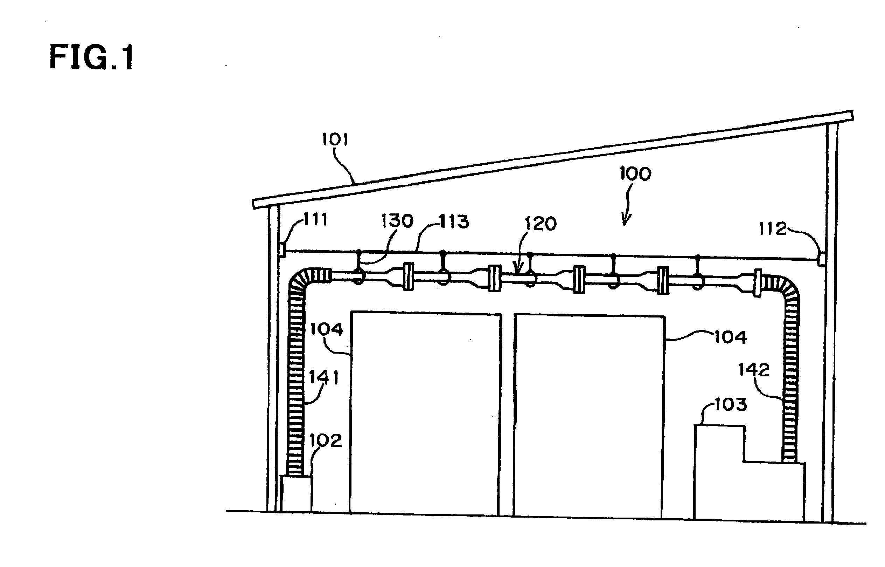

FIG. 1 illustrates an aerial pipe arrangement 100 in accordance with the first embodiment of the present invention.

The aerial pipe arrangement 100 is constructed or provided in a factory 101. An air-compressor 102 is disposed at one end in the factory 101, and a machine 103 driven by compressed air is disposed at the other end in the factory 101. It is supposed that though it is necessary to supply compressed air discharged from the air-compressor 102, to the machine 103, other machines 104 are disposed between the air-compressor 102 and the machine 103, and accordingly, there is no space on a floor of the factory 101 to arrange pipes through which the air-compressor 102 and the machine 103 can make fluid-communication to each other.

The aerial pipe arrangement 100 in accordance with the first embodiment of the present invention is preferably applied to the factory 101.

As illustrated in FIG. 1, the aerial pipe arrangement 100 in accordance with the first embodiment is comprised of a main wire 113 tensioned between a first support 111 and a second support 112, a hollow fluid-feeding pipe 120 extending between the first and second supports 111 and 112, and a plurality of hangers 130 for allowing the fluid-feeding pipe 120 to hang from the main wire 113.

Each of the first and second supports 111 and 112 comprises a bracket fixed on a wall of the factory 101, for instance.

The fluid-feeding pipe 120 is connected at one end thereof to the air-compressor 102 through a plastic bellows pipe 141, and at the other end thereof to the machine 103 through a plastic bellows pipe 142.

The fluid-feeding pipe 120 is comprised of a plurality of fundamental pipes 150 capable of being connected to one another.

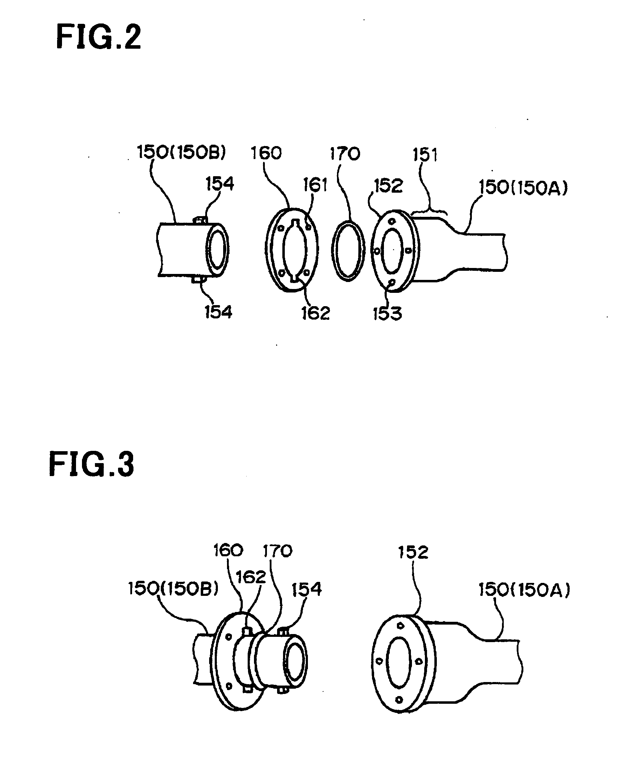

FIG. 2 is an exploded perspective view of a pair of the fundamental pipes 150.

As illustrated in FIG. 2, the first fundamental pipe 150 is formed at one end thereof with both an increased-radius portion 151 having an increased inner radius, and a flange 152 formed continuous to the increased-radius portion 151.

The flange 152 has an opening having an inner diameter to allow the fundamental pipe 150 to fit thereinto. The flange 152 is formed at regular intervals with four through-holes 153 through each of which a bolt is inserted.

The fundamental pipe 150 is formed with two projections 154 located at a predetermined distance from the other end thereof. The two projections 154 are located on a certain diameter of the fundamental pipe 150. That is, the two projections 154 are spaced away from each other by 180 angles of circumference about a center of a cross-section of the fundamental pipe 150.

A first fundamental pipe 150A (the fundamental pipe 150 disposed at the right in FIG. 2) and a second fundamental pipe 150B ((the fundamental pipe 150 disposed at the left in FIG. 2) are connected to each other through a movable flange 160 and a packing 170 comprised of a rubber ring.

The movable flange 160 has an inner diameter to fit around the fundamental pipe 150.

The movable flange 160 is formed with four through-holes 161. The through-holes 161 are in alignment with the through-holes 153 of the flange 152 when the movable flange 160 and the flange 152 of the fundamental pipe 150 are coupled with each other.

The movable flange 160 is formed at an inner edge of the opening thereof with two cut-outs 162 each having a size to allow each of the projections 154 to pass therethrough.

The positional relation between the two cut-outs 162 is identical with the positional relation between the two projections 154 formed on an outer surface of the fundamental pipe 150. Accordingly, when the fundamental pipe 150 is fit into the opening of the movable flange 160, the two projections 154 are in alignment with the two cut-outs 162, and pass through the cut-outs 162, respectively.

Furthermore, when the two projections 154 are in alignment with the two cut-outs 162, that is, when the two projections 154 and the two cut-outs 162 are located on a common line, the through-holes 161 of the movable flange 160 are not in alignment with the through-holes 153 of the flange 152.

In contrast, when the through-holes 161 of the movable flange 160 are in alignment with the through-holes 153 of the flange 152 of the first fundamental pipe 150A, the two projections 154 are not in alignment with the two cut-outs 162.

Hence, as mentioned later, after the movable flange 160 and the flange 152 of the first fundamental pipe 150A are coupled with each other through bolts and nuts, the projections 154 are not in alignment with the cut-outs 162, and accordingly, the projections 154 act as a stopper to the movable flange 160 to thereby prevent the second fundamental pipe 150B from separating from the movable flange 160 and accordingly the first fundamental pipe 150A.

The above-mentioned fluid-feeding pipe 120 was suggested by the inventor of the present invention (for instance, see Japanese Patent Application Publication No. 2004-332857).

Each of the hangers 130 is comprised of a wire connected to the main wire 113. The wire is fixed at one end thereof to the main wire 113, and forms a ring at the other end. The fluid-feeding pipe 120 is supported in the ring for hanging from the main wire 113.

The packing 170 comprised of a rubber ring has an inner diameter to fit around the fundamental pipe 150.

FIGs. 3 to 5 are perspective views showing steps for connecting the first and second fundamental pipes 150A and 150B to each other.

Hereinbelow is explained how the first and second fundamental pipes 150A and 150B are connected to each other, with reference to FIGs. 3 to 5.

First, as illustrated in FIG. 3, the movable flange 160 is fit around the second fundamental pipe 150B, and then, the movable flange 160 is moved such that the two projections 154 of the second fundamental pipe 150B pass through the cut-outs 162 of the movable flange 160.

Then, the packing 170 is fit around the second fundamental pipe 150B.

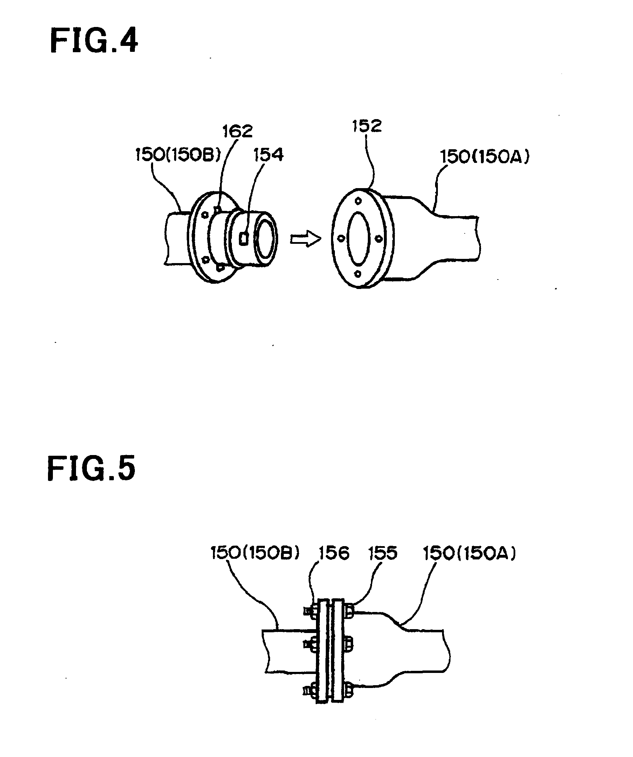

Then, as illustrated in FIG. 4, the second fundamental pipe 150B is rotated by 90 degrees. As a result, the projections 154 are not in alignment with the cut-outs 162 axially of the second fundamental pipe 150B.

Then, the second fundamental pipe 150B is fit into the opening of the flange 152 of the first fundamental pipe 150A.

Then, as illustrated in FIG. 5, bolts 155 are inserted into both the through-holes 153 of the flange 152 of the first fundamental pipe 150A and the through-holes 161 of the movable flange 160, and are screwed with nuts 156.

Thus, the first and second fundamental pipes 150A and 150B are connected to each other.

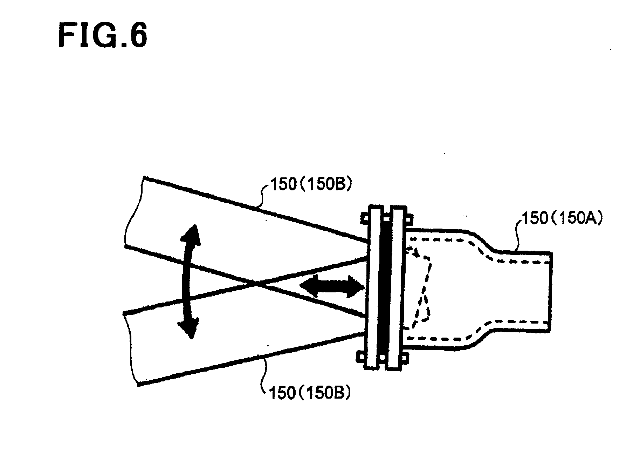

FIG. 6 illustrates the first and second fundamental pipes 150A and 150B connected to each other.

Since the second fundamental pipe 150B is not fixed axially thereof to the first fundamental pipe 150A, the second fundamental pipe 150B can extend or contract axially thereof relative to the first fundamental pipe 150A. In other words, the second fundamental pipe 150B is movable axially thereof relative to the second fundamental pipe 150B.

Specifically, if the second fundamental pipe 150B is pushed into the increased-radius portion 151 of the first fundamental pipe 150A, the second fundamental pipe 150B contracts relative to the first fundamental pipe 150A, and if the second fundamental pipe 150B is pulled out of the increased-radius portion 151 of the first fundamental pipe 150A, the second fundamental pipe 150B extends relative to the first fundamental pipe 150A.

Furthermore, since the second fundamental pipe 150B is not fixed axially thereof to the first fundamental pipe 150A, the second fundamental pipe 150B can incline relative to an axis of the first fundamental pipe 150A.

That is, the second fundamental pipe 150B has extensibility and turnability relative to the first fundamental pipe 150A.

Although dependent on an inner diameter of the fundamental pipe 150, the second fundamental pipe 150B can move relative to the first fundamental pipe 150A by a distance in the range of about 60 to about 150 mm, and can incline relative to the first fundamental pipe 150A by about 15 degrees at maximum.

Hereinbelow is explained an example of a method of constructing the aerial pipe arrangement 100 in accordance with the first embodiment.

First, the main wire 113 is tensioned between a bracket acting as the first support 111 and a bracket acting as the second support 112.

Then, the hangers 130 are linked to the main wire 113.

Then, the fluid-feeding pipe 120 is constructed between the first and second supports 111 and 112 such that the fluid-feeding pipe 120 passes through the rings defined by the hangers 130.

Thereafter, the fluid-feeding pipe 120 is connected to the air-compressor 102 through the plastic bellows pipe 141, and further, to the machine 103 through the plastic bellows pipe 142.

In accordance with the above-mentioned steps, the aerial pipe arrangement 100 in accordance with the first embodiment is constructed in the factory 101.

The aerial pipe arrangement 100 in accordance with the first embodiment makes it possible to supply compressed air to the machine 103 as a fluid-receiver from the air-compressor 102 as a fluid-supplier through the aerially constructed fluid-feeding pipe 120, even if there is no space on a floor or on the ground to arrange necessary pipes.

When pipes are aerially arranged, it is quite important that the pipes have a high resistance to vibration. If the pipes have a small resistance to vibration, the pipes might be deviated to one another, disconnected from one another, or fallen, even if vibration caused by wind or earthquake were small.

Since the fluid-feeding pipe 120 constituting the aerial pipe arrangement 100 in accordance with the first embodiment is comprised of the fundamental pipes 150 each having flexibility to adjacent pipes, as mentioned earlier, even if the fluid-feeding pipe 120 receives vibration, the vibration is absorbed by the flexibility of the fundamental pipes 150, avoiding the fundamental pipe 150 from being separated from adjacent ones, or from falling.

Furthermore, even if the air-compressor 102 as a fluid-supplier and/or the machine 103 as a fluid-receiver are moved to a second position from a first position, the aerial pipe arrangement 100 in accordance with the first embodiment can be reconstructed by rearranging the main wire 113 and the fluid-feeding pipe 120 with less labor than labor necessary for rearranging pipes arranged on the ground.

The structure of the aerial pipe arrangement 100 in accordance with the first embodiment is not to be limited to the above mentioned structure. The aerial pipe arrangement 100 in accordance with the first embodiment has many alternatives, modifications and equivalents as follows.

For instance, the main wire 113 is fixed to the brackets attached to a wall of the factory 101. As an alternative, the main wire 113 may be tensioned over steel skeleton in the factory 101.

In the first embodiment, the fluid-feeding pipe 120 is connected to the air-compressor through the plastic bellows pipe 141, and further to the machine 103 through the plastic bellows pipe 142. In place of the plastic bellows pipes 141 and 142, other connectors may be used.

Each of the hangers 130 in the first embodiment is comprised of a ring-shaped wire. The hangers 130 are not to be limited to a ring-shaped wire. Other devices or tools may be used in place of the hangers 130.

The aerial pipe arrangement 100 in accordance with the first embodiment is designed to include the two projections 154 and the corresponding two cut-outs 162. The aerial pipe arrangement 100 in accordance with the first embodiment may be designed to include only one, or three or more projection(s) or corresponding cut-out(s).

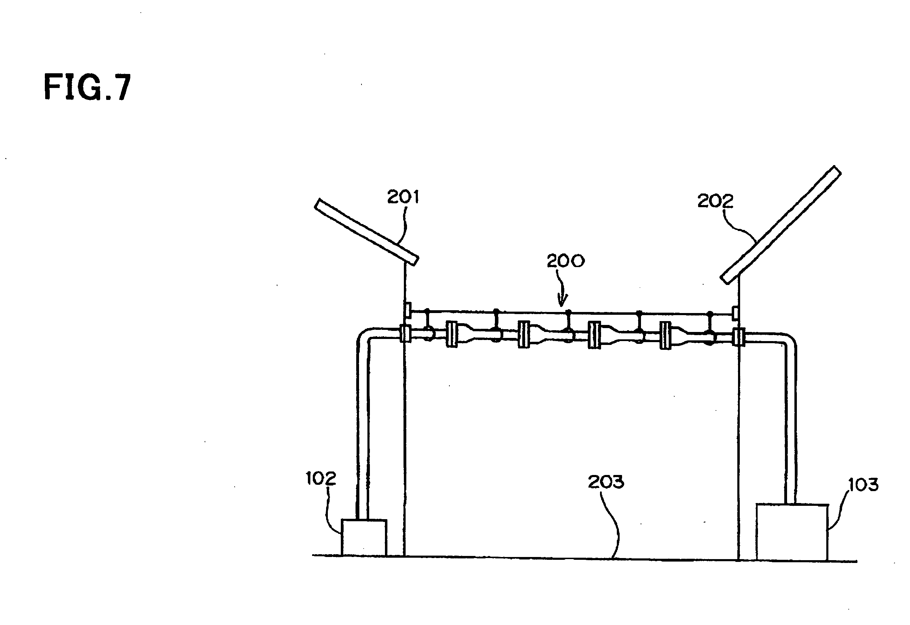

FIG. 7 illustrates an aerial pipe arrangement 200 in accordance with the second embodiment of the present invention.

The aerial pipe arrangement 200 in accordance with the second embodiment of the present invention is constructed between a first factory 201 and a second factory 202.

The aerial pipe arrangement 200 in accordance with the second embodiment is structurally identical with the aerial pipe arrangement 100 in accordance with the first embodiment. Accordingly, parts or elements that correspond to those of the first embodiment have been provided with the same reference numerals, and operate in the same manner as corresponding parts or elements in the first embodiment, unless explicitly explained hereinbelow.

It is assumed that an area 203 located between the first factory 201 and the second factory 202 is an area in which pipes cannot be arranged on the ground, such as a river, a railroad or a highway.

Even if the area 203 in which pipes cannot be arranged on the ground exists between the first factory 201 and the second factory 202, the aerial pipe arrangement 200 in accordance with the second embodiment makes it possible to supply compressed air to the machine 103 as a fluid-receiver, disposed in the second factory 202 from the air-compressor 102 as a fluid-supplier, disposed in the first factory 201 through the aerially constructed fluid-feeding pipe 120.

If a highway or a railroad is constructed in the area 203, it is expected that the fluid-feeding pipe 120 is always exposed to vibration. As mentioned above, the fluid-feeding pipe 120 in the second embodiment is comprised of the fundamental pipes 150 each having flexibility to adjacent ones, even if the fluid-feeding pipe 120 receives vibration, the vibration is absorbed by the flexibility of the fundamental pipes 150. Thus, it is possible to prevent the fundamental pipes 150 from being separated from adjacent ones, or from falling.

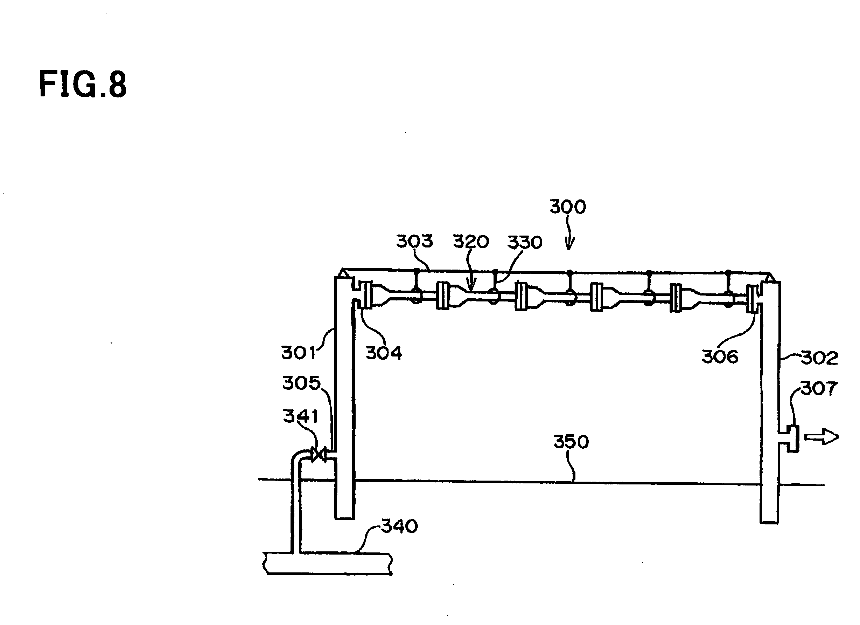

FIG. 8 illustrates an aerial pipe arrangement 300 in accordance with the third embodiment of the present invention.

As illustrated in FIG. 3, the aerial pipe arrangement 300 in accordance with the third embodiment of the present invention is comprised of a first hollow supply-pole 301 standing on the ground 350, a second hollow supply-pole 302 standing on the ground 350, a main wire 303 tensioned between a summit of the first supply-pole 301 and a summit of the second supply-pole 302, a fluid-feeding pipe 320 extending between the first and second supply-poles 301 and 302, and a hanger 330 for hanging the fluid-feeding pipe 320 from the main wire 303.

In the aerial pipe arrangement 300 in accordance with the third embodiment, the main wire 303 is tensioned between a summit of the first supply-pole 301 and a summit of the second supply-pole 302. That is, a summit of the first supply-pole 301 corresponds to the first support 111 in the first embodiment, and a summit of the second supply-pole 302 corresponds to the second support 112 in the first embodiment.

The main wire 303, the fluid-feeding pipe 320 and the hanger 330 in the second embodiment have the same structure as the structure of the main wire 113, the fluid-feeding pipe 120 and the hanger 130 in the first embodiment, respectively.

The first supply-pole 301 is formed immediately below a summit thereof with a flange 304. The first supply-pole 301 is connected to the fluid-feeding pipe 320 through the flange 304.

The first supply-pole 301 is formed in the vicinity of a lower end thereof with an inlet opening 305.

A gas pipe 304 through which gas is fed is buried in the ground. The first supply pole 301 is connected at the inlet opening 305 to the gas pipe 304 through a fluid-volume control valve 341 which controls a volume of gas fed from the gas pipe 304 to the first supply-pole 301.

Gas flowing in the gas pipe 304 is fed into the fluid-feeding pipe 320 through the fluid-volume control valve 341, the inlet opening 305, the first supply-pole 301 and the flange 304.

The second supply-pole 302 is formed immediately below a summit thereof with a flange 306. The second supply-pole 302 is connected to the fluid-feeding pipe 320 through the flange 306.

The second supply-pole 302 is formed in the vicinity of a lower end thereof with an outlet opening 307. Gas fed from the gas pipe 340 through the first supply-pole 301, the fluid-feeding pipe 320 and the second supply-pole 302 is supplied to a fluid-receiver (not illustrated) through the outlet opening 307.

In the aerial pipe arrangement 300 in accordance with the third embodiment, gas flowing in the gas pipe 340 is fed into the first supply-pole 301 through the fluid-volume control valve 341, passes through the fluid-feeding pipe 320, and then, reaches the second supply-pole 302. Thereafter, the gas is supplied to a fluid-receiver through the outlet opening 307 of the second supply-pole 302.

Similarly to the above-mentioned first and second embodiments, the aerial pipe arrangement 300 in accordance with the third embodiment makes it possible to feed gas to a fluid-receiver from the gas pipe 340 as a fluid-supplier through the aerially constructed fluid-feeding pipe 320 even in an area in which there is no space for arranging pipes on the ground.

Since the fluid-feeding pipe 320 constituting the aerial pipe arrangement 300 in accordance with the third embodiment is comprised of the fundamental pipes 150 each having flexibility to adjacent pipes, even if the fluid-feeding pipe 320 receives vibration caused by winds and so on, the vibration is absorbed by the flexibility of the fundamental pipes 150, avoiding the fundamental pipe 150 from being separated from adjacent ones, or from falling.

There is possibility of gas leakage from the fluid-feeding pipe 320. If gas leaks from a pipe buried in the ground, the gas is accumulated in the ground, or flows up to the atmosphere. In either case, if the leaked gas catches fire, the gas would be exploded.

In contrast, in the aerial pipe arrangement 300 in accordance with the third embodiment, even if gas leaks from the fluid-feeding pipe 320, the gas would not catch fire, because there is no fire in the air. Furthermore, the leaked gas would be quite swiftly scattered in the air, the gas would not catch fire.

The aerial pipe arrangement 300 in accordance with the third embodiment is designed to include both the first and second supply-poles 301 and 302. It should be noted that the aerial pipe arrangement 300 may be designed to include one of the first and second supply-poles 301 and 302.

The first supply-pole 301 is connected to the gas pipe 304 in the third embodiment. As an alternative, the first supply-pole 301 may be connected to a pipe in which fluid flows, such as a water pipe.

If necessary, the first and/or second supply-poles 301 and 302 may be supported by wires tensioned between them and the ground, or wires through which they are hung.

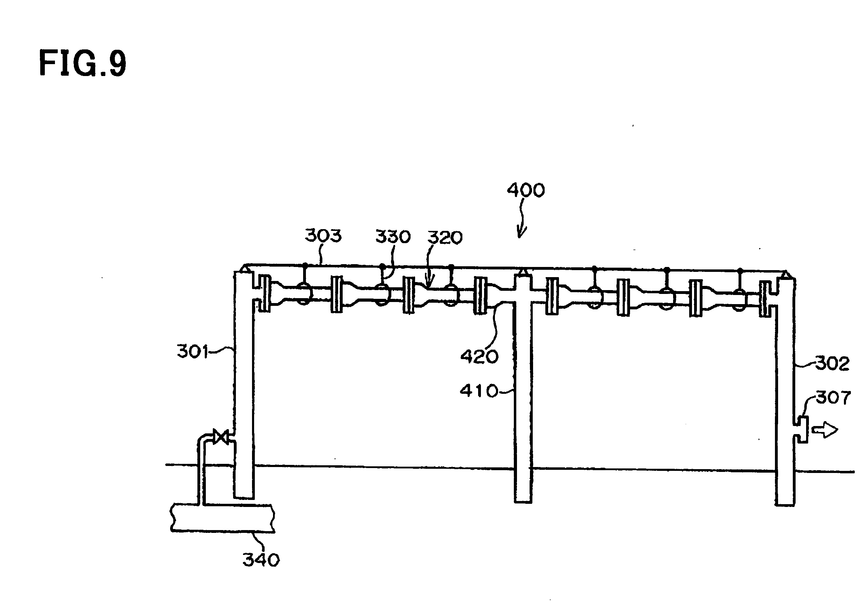

FIG. 9 illustrates an aerial pipe arrangement 400 in accordance with the fourth embodiment of the present invention.

The aerial pipe arrangement 400 in accordance with the fourth embodiment is designed to further include a support-pole 410 in comparison with the aerial pipe arrangement 300 in accordance with the third embodiment illustrated in FIG. 8.

The aerial pipe arrangement 400 in accordance with the fourth embodiment has the same structure as that of the aerial pipe arrangement 300 in accordance with the third embodiment except including the support-pole 410.

The support-pole 410 stands on the ground 350 between the first and second supply-poles 301 and 302. It is not always necessary for the support-pole 410 to be hollow unlike the first and second supply-poles 301 and 302. The support-pole 410 may be comprised of a solid pole.

The main wire 303 is tensioned over summits of the first and second supply-poles 301 and 302 and a summit of the support-pole 410.

Furthermore, the support-pole 410 has a connection pipe 420 horizontally attached thereto in the vicinity of a summit thereof. The connection pipe 420 is identical in structure to the fundamental pipe 150.

The support-pole 410 is hollow only in an area through which the connection pipe 420 passes. In other words, a fluid path is defined in the support-pole 410 by the connection pipe 420.

Hence, the fluid-feeding pipe 320 is supported by the support-pole 410 naturally by using the connection pipe 420 as one of a plurality of the fundamental pipes 150 constituting the fluid-feeding pipe 320.

If the first and second supply-poles 301 and 302 are spaced away from each other by a long distance, it is possible to stably support the fluid-feeding pipe 320 by standing the support-pole 410 between the first and second supply-poles 301 and 302.

The aerial pipe arrangement 400 in accordance with the fourth embodiment is designed to include one support-pole 410. It should be noted that the aerial pipe arrangement 400 in accordance with the fourth embodiment may be designed to include two or more support-poles 410 in dependence on a distance between the first and second support-poles 301 and 302.

Furthermore, it is not always necessary to attach the connection pipe 420 to the support-pole 410. The support-pole 410 may be used merely for supporting the main wire 303 and the fluid-feeding pipe 320.

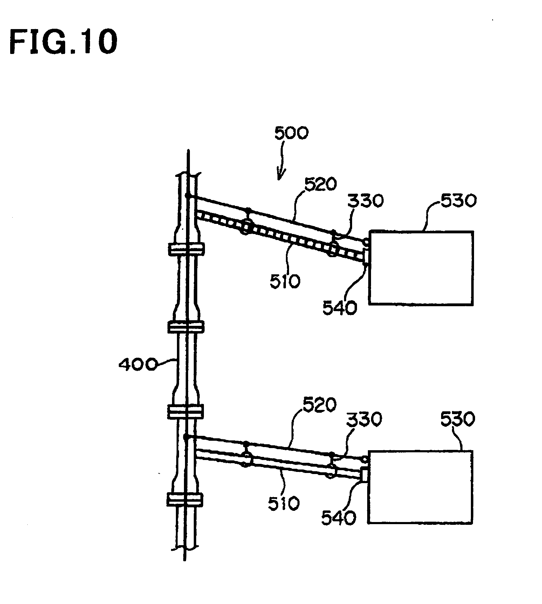

FIG. 10 illustrates an aerial pipe arrangement 500 in accordance with the fifth embodiment of the present invention.

The aerial pipe arrangement 500 in accordance with the fifth embodiment of the present invention is designed to additionally include branch pipes 510 and branch wires 520 in comparison with the aerial pipe arrangement 400 in accordance with the fourth embodiment illustrated in FIG. 9.

Each of the branch wires 520 is connected at one end thereof to the main wire 303, and at the other end thereof to each of houses 530.

Each of the branch pipes 510 is connected at one thereof to the fluid-feeding pipe 320, and at the other end thereof to a fluid-volume meter 540 equipped in each of the houses 530. Each of the branch pipes 510 is comprised of a bellows hose composed of plastic.

Each of the branch pipes 510 is hung from the corresponding wire 520 through the hanger 330.

The aerial pipe arrangement 500 in accordance with the fifth embodiment makes it possible to temporarily and readily construct a gas pipe to each of the houses 530 while the gas pipe 340 (see FIGs. 8 and 9) is under construction. As a result, it is no longer necessary to temporarily bury a pipe between the gas pipe 340 and each of the houses 530, it would be possible to reduce wasteful excavation.

Specifically, it was necessary in the conventional construction to excavate roads for looking for the gas pipe 340 in order to connect the gas pipe 340 to a gas meter of each of the houses 530 through a temporal pipe.

In contrast, in the aerial pipe arrangement 500 in accordance with the fifth embodiment, each of the branch pipes 510 is connected to the aerially constructed to the fluid-feeding pipe 320 to thereby make it no longer necessary to excavate roads.

Each of the branch pipes 510 in the fifth embodiment is comprised of a plastic bellows hose. As an alternative, each of the branch pipes 510 may be comprised of other kind of hose or pipe.

## Claims

1. An aerial pipe arrangement (100, 200, 300, 400, 500) for feeding fluid to a fluid-receiver (103) from a fluid-supplier (102) through a pipe, comprising:
a wire (113, 303) tensioned between a first support (301) and a second support (302);
a hollow fluid-feeding pipe (120, 320) extending between the first and second supports (301, 302); and
a hanger (130, 330) for allowing the fluid-feeding pipe (120, 320) to hang from the wire (113, 303),
wherein the fluid-feeding pipe (120, 320) is comprised of a plurality of fundamental pipes (150) capable of being connected to one another,
a second fundamental pipe (150B) connected to a first fundamental pipe (150A) can extend and contract axially thereof relative to the first fundamental pipe (150A), and can further bend obliquely relative to the first fundamental pipe (150A),
the first fundamental pipe (150A) is formed at one end thereof with an increased-radius portion (151) having an increased inner radius, and a flange (152) formed continuous to the increased-radius portion (151),
the second fundamental pipe (150B) is formed with at least one projection (154) located remote from an end of the second fundamental pipe (150B),
the first and second fundamental pipes (150A, 150B) are connected to each other through a movable flange (160),
the movable flange (160) has an inner diameter to fit around the second fundamental pipe (150B),
the movable flange (160) is formed at an inner edge thereof with a cut-out (162) through which the projection (154) can pass, and
when the first and second fundamental pipes (150A, 150B) are connected to each other through the movable flange (160), the movable flange (160) is connected to the flange (152) of the first fundamental pipe (150A) such that the projection (154) and the cut-out (162) are not in alignment with each other.

2. The aerial pipe arrangement (300) as set forth in claim 1, further comprising a first hollow supply-pole (301) standing on the ground,
wherein the first hollow supply-pole (301) defines the first support, and is connected to the fluid-supplier (102), and
the fluid supplied from the fluid-supplier (102) is fed to the fluid-receiver (103) through the first hollow supply-pole (301) and the fluid-feeding pipe (320) in this order.

3. The aerial pipe arrangement (300) as set forth in any of claims 1 to 2, further comprising a second hollow supply-pole (302) standing on the ground,
wherein the second hollow supply-pole (302) defines the second support, and is connected to the fluid-receiver (103), and
the fluid supplied from the fluid-supplier (102) is fed to the fluid-receiver (103) through the fluid-feeding pipe (320) and the second hollow supply-pole (302) in this order.

4. The aerial pipe arrangement (400) as set forth in claim 3, further comprising at least one support-pole (410) standing on the ground between the first and second hollow supply-poles (301, 302) for supporting the fluid-feeding pipe (320) therewith.

5. The aerial pipe arrangement (400) as set forth in claim 4, wherein the support-pole has a fundamental pipe (420) to which the fluid-feeding pipe (320) can be connected to, the fluid-feeding pipe (320) being connected to the fundamental pipe (420).

6. The aerial pipe arrangement (500) as set forth in any one of claims 1 to 5, further comprising at least one branch pipe (510), the branch pipe (510) being connected to the fluid-feeding pipe (320) to partially separate the fluid from the fluid-feeding pipe (320) thereinto.

7. The aerial pipe arrangement (500) as set forth in claim 6, wherein the branch pipe (510) is comprised of a bellows pipe composed of plastic.

8. A method of aerially arranging pipes for feeding fluid to a fluid-receiver (103) from a fluid-supplier (102), comprising:
tensioning a wire (113, 303) between a first support (301) and a second support (302); and
hanging a hollow fluid-feeding pipe (120, 320) extending between the first and second supports (301, 302), from the wire (113, 303),
wherein the fluid-feeding pipe (120, 320) is comprised of a plurality of fundamental pipes (150) capable of being connected to one another,
a second fundamental pipe (150B) connected to a first fundamental pipe (150A) can extend and contract axially thereof relative to the first fundamental pipe (150A), and can further bend obliquely relative to the first fundamental pipe (150A),
the first fundamental pipe (150A) is formed at one end thereof with an increased-radius portion (151) having an increased inner radius, and a flange (152) formed continuous to the increased-radius portion (151),
the second fundamental pipe (150B) is formed with at least one projection (154) located remote from an end of the second fundamental pipe (150B),
the first and second fundamental pipes (150A, 150B) are connected to each other through a movable flange (160),
the movable flange (160) has an inner diameter to fit around the second fundamental pipe (150B),
the movable flange (160) is formed at an inner edge thereof with a cut-out (162) through which the projection (154) can pass, and
when the first and second fundamental pipes (150A, 150B) are connected to each other through the movable flange (160), the movable flange (160) is connected to the flange (152) of the first fundamental pipe (150A) such that the projection (154) and the cut-out (162) are not in alignment with each other.

9. The method as set forth in claim 8, further comprising:
standing a first hollow supply-pole (301) on the ground, the first hollow supply-pole (301) defining the first support; and
connecting the first hollow supply-pole (301) to the fluid supplier (102).

10. The method as set forth in any of claims 8 to 9, further comprising:
standing a second hollow supply-pole (302) on the ground, the second hollow supply-pole (302) defining the second support; and
connecting the second hollow supply-pole (302) to the fluid-receiver (103).

11. The method as set forth in claim 10, further comprising standing at least one support pole (410) between the first and second hollow supply-poles (301, 302) for supporting the fluid-feeding pipe (320) therewith.

12. The method as set forth in any one of claims 8 to 11, further comprising connecting at least one branch pipe (510) to the fluid-feeding pipe (320) to partially separate the fluid from the fluid-feeding pipe (320) into the branch pipe (510).
